# EUROPEAN PATENT APPLICATION

(11) **EP 4 317 632 A1**
(43) Date of publication of application: **07.02.2024**
(21) Application number: 22774135.2
(22) Date of filing: 18.03.2022
(51) Int. Cl.: E05B 15/00, E05B 15/10, E05B 47/00, B65D 43/00, B65D 55/02

(54) **LOCK CATCH DEVICE, LOCK AND CONTAINER**

(30) Priority: 24.03.2021 CN 202110314014
(71) Applicant: Horen Cortp Co., Ltd., Shanghai 200233 (CN)
(72) Inventor: SU, Yongping, Shanghai 200233 (CN)
(74) Representative: Bardehle Pagenberg Partnerschaft mbB Patentanwälte Rechtsanwälte
(86) International application number: PCT/CN2022/081643
(87) International publication number: WO 2022/199474

(57) **Abstract**

Disclosed are a lock catch device, a locking unit and a container. The lock catch device is arranged in the container and comprises: a first locking member arranged to a cover of the container; a second locking member, which is arranged opposite to the first locking member and is operatively snapped with or disengaged from the first locking member; a mounting body, which is arranged to any of side panels of the container and fixedly connected to the second locking member and operatively drives the second locking member to move in a direction toward or away from the first locking member; and an attraction member, which is arranged on the mounting body and is configured to be operatively magnetically attracted and then drive the mounting body to drive the second locking member to move in the direction away from the first locking member, wherein the second locking member is configured to be driven by the mounting body to move in the direction toward the first locking member to a preset position and is then snapped to the first locking member, and the second locking member is further configured to be driven by the mounting body to move in the direction away from the first locking member and is then disengaged from the first locking member. The lock catch device can be used repeatedly and is environmental friendly.

## Description

### Cross-reference to related applications

This application claims the priority of the Chinese patent application No. 202110314014.0 filed on March 24, 2021 titled "A lock catch device, a locking unit and a container", the full text thereof is incorporated herein by reference.

### Technical Field

Embodiments of the present invention relate to the field of locks, and in particular, to a lock catch device, a locking unit and a container.

### Technical Background

Existing recycling containers generally include a box body and a cover. When the cover is closed, a disposable cable tie or a lock catch is used to prevent theft through cable tie holes or lock holes preformed on the cover and on the box body, so that the inside of the box is closed relative to the outside, thus avoiding being stolen during transportation or transferring. This kind of cable tie or anti-theft lock catch is installed outside the box. When opening the container, the cable tie or lock catch need to be destroyed, in particular opening the container in batch on the operating site, a large number of damaged cable ties or residual parts of the lock catch will remain on the site, which will pollute the site environment. The use of such disposable consumables is not conducive to environmental protection. Secondly, since the cable tie or lock catch is exposed outside of the box body, when being maliciously stolen, the lock catch or cable tie can be easily destroyed by ordinary tools such as scissors or pliers, so that the items in the box can be easily stolen, and the security is relatively low.

### Summary

An objective of the embodiments of the present invention is to provide a lock catch device, a locking unit and a container, so that the locking unit can be used repeatedly and the safety of the container can be improved.

In order to solve the above technical problems, embodiments of the present invention provide a lock catch device, the lock catch device is provided in a container, and comprises:
a first locking member, which is arranged to a cover of the container;
a second locking member, which is arranged opposite to the first locking member, and is operatively moved in a direction toward the first locking member to a preset position, and is snapped with the first locking member, or the second locking member is moved in a direction away from the first locking member and is disengaged from the first locking member;
a mounting body, which is arranged to any of side panels of the container, and is fixedly connected to the second locking member, and the mounting body has a reset portion, the mounting body operatively drives the second locking member to move in a direction toward or away from the first locking member;
wherein the mounting body is configured to be operatively magnetically attracted to drive the second locking member to move in the direction away from the first locking member, and the reset portion applies a biasing force that drives the second locking member to move in the direction towards the first locking member.

Compared with the prior art, in the embodiment of the present invention, since the lock catch device includes: a first locking member, a second locking member and a mounting body, the mounting body can drive the second locking member to move in the direction toward the first locking member, so that the second locking member is snapped with the first locking member, at this time, the cover of the container is locked. And, the mounting body can also drive the second locking member to move in the direction away from the first locking member, so that the second locking member is disengaged from the first locking member, at this time, the cover of the container is opened. In order to enable the mounting body to drive the second locking member to move in the direction away from the first locking member, the mounting body can be magnetically attracted, and after magnetic attraction, drive the second locking member to move in the direction away from the first locking member. Specifically, the second locking member can be driven to move in the direction away from the first locking member by the mutual attraction of the mounting body and an external attraction member, so as to achieve the purpose of unlocking. And, since the mounting body also has a reset portion, and the reset portion applies a biasing force that drives the second locking member to move in the direction toward the first locking member. Thus, after the magnetic attraction of the mounting body is removed, the mounting body can drive the second locking member to return to the above-mentioned preset position through the reset portion, at this time, the first locking member and the second locking member are restored to a state where they are snapped with each other. It can be seen from the above content that the lock catch device in this application is not disposable, but can be used repeatedly, which is environmental friendly, and since the lock catch device is entirely located in the container, when the cover is closed, the lock catch device cannot be seen from the outside, and it is only required to attach the external attraction member to the outside of the side panel at the position corresponding to the mounting body, the mounting body and the external attraction member are attracted by each other, and the lock catch device can be opened. Since the lock catch device is invisible, temporary workers such as logistics personnel and couriers cannot know the key to opening the box at all and will be unable to unlock the container, thus the safety of the container can be significantly improved.

In an embodiment, the first locking member extends downward from the cover, the second locking member extends from bottom to top, and the second locking member is located on a side of the first locking member facing the side panel, the mounting body is located below the second locking member and is fixedly connected to a lower end of the second locking member, and the mounting body operatively drives the second locking member to rotate in the direction of toward or away from the first locking member with an end thereof away from the second locking member as a center of rotation.

In an embodiment, the mounting body comprises:
a rotating shaft, which is arranged parallel to the side panel, and the rotating shaft is rotatable around its own axis;
a connecting portion, which is fixedly connected to the rotating shaft and the second locking member respectively, and the connecting portion operatively drives the second locking member to rotate around the axis of the rotating shaft, the connecting portion is operatively magnetically attracted;
the reset portion, which is fixedly connected to the connecting portion, and applies a biasing force to the connecting portion that drives the second locking member to move in the direction toward the first locking member.

In an embodiment, a portion of the inner wall of the side panel extends toward the inside of the container to form a bearing portion, and the connecting portion comprises:
a seat body, which extends from the rotating shaft in a direction toward the side panel;
a connecting seat, which extends upward from the seat body and is fixedly connected to the second locking member, and the connecting seat is operatively magnetically attracted;
wherein the reset portion is an elastic member, an upper end of the elastic member is fixedly connected to a lower end of the seat body, and a lower end of the elastic member is fixed to the bearing portion.

In an embodiment, a snap concave area is provided below the seat body, and an upper segment of the elastic member is snapped into the snap concave area.

In an embodiment, the lock catch device further comprises a lock catch mounting seat, the lock catch mounting seat is located on a side of the connecting portion away from the side panel, and the rotating shaft is rotatably connected to the lock catch mounting seat.

In an embodiment, the lock catch mounting seat comprises:
a mounting plate, which is arranged opposite to the connecting portion;
a guide plate, which extends from an upper segment of the mounting plate in a direction toward the connecting portion, an end of the guide plate is provided with a groove that is open toward the connecting portion, and the connecting portion is slidably arranged inside the groove in a direction toward or away from a bottom of the groove;
a rotating shaft mounting portion, which extends from a lower segment of the mounting plate in a direction toward the rotating shaft, and the rotating shaft is rotatably connected to the rotating shaft mounting portion.

In an embodiment, the rotating shaft mounting portion comprises: a pair of rotating shaft seats oppositely arranged in a length direction of the rotating shaft, each of the rotating shaft seats is provided with a shaft hole in the side facing the other rotating shaft seat, and both ends of the rotating shaft in the length direction are rotatably located in the two shaft holes on the pair of rotating shaft seats respectively.

In an embodiment, the mounting body comprises:
a lock catch mounting member, which drives the second locking member to move linearly in a direction toward or away from the first locking member, and the lock catch mounting member is operatively magnetically attracted;
the reset portion, which is a resilient member, and the resilient member is abutted against the side panel and the lock catch mounting member respectively.

In an embodiment, the lock catch device further comprises a lock catch limiting seat, which is located on a side of the lock catch mounting member away from the side panel, and a side of the lock catch limiting seat facing the lock catch mounting member is provided with a limiting groove open to the lock catch mounting member, and the lock catch mounting member is slidably arranged in the limiting groove in a direction toward or away from the first locking member.

In an embodiment, the mounting body comprises:
a lock catch mounting portion, which is fixedly connected to the second locking member, and the lock catch mounting portion is operatively magnetically attracted;
the reset portion, which is an elastic plate, the elastic plate is located on a side of the lock catch mounting portion away from the side panel, and is fixedly connected to the lock catch mounting portion, and the lock catch mounting portion drives the second locking member to rotate in a direction toward or away from the first locking member with the elastic plate as the center of rotation.

In an embodiment, the elastic plate is an arc elastic plate, and the arc elastic plate is recessed in a direction toward the second locking member; the lock catch mounting portion comprises:
a supporting plate, which extends from a side of the arc spring plate toward the side panel in a direction toward the side panel;
a supporting seat, the supporting seat extends upward from the supporting plate and is fixedly connected to the lower end of the second locking member, and the supporting seat is operatively magnetically attracted.

In an embodiment, the elastic plate is arranged perpendicular to the side panel, and the lock catch mounting portion extends upward from the elastic plate and is fixedly connected to the lower end of the second locking member.

In an embodiment, the first locking member is a first elastic snapping hook, an end of the first elastic snapping hook extends in a direction toward the second locking member, and a lower end surface of a portion of the first elastic snapping hook extending toward the second locking member is an inclined surface inclined from top to bottom, from the second locking member in a direction away from the second locking member;
the second locking member is a second elastic snapping hook, and an end of the second elastic hook extends in a direction toward the first elastic snapping hook.

The present invention also provides a locking unit, which comprises: the above-mentioned lock catch device and an external attraction member;
wherein, the mounting body is configured to be operatively attracted by the magnetic force of the external attraction member, and drives the second locking member to move in a direction away from the first locking member.

The present invention also provides a container comprising:
a base;
two pairs of opposite side panels, each of which is connected to the base;
a cover, which is arranged opposite to the base and covered on the side panels;
the above-mentioned lock catch device, the lock catch device is arranged inside the container and located on any of the side panels.

In an embodiment, an identification member is provided on an outside of the side panel provided with the lock catch device, and the identification member is arranged opposite to the mounting body.

In an embodiment, the identification member is a positioning hole formed on the side panel.

### Brief Description of drawings

One or more embodiments are exemplified by the drawings in the corresponding drawings, and these exemplifications do not constitute limitations of the embodiments, and elements with the same reference numerals in the drawings are denoted as similar elements. Unless otherwise stated, the figures in the accompanying drawings do not constitute a scale limitation.
Fig.1 is the structural schematic diagram of the container in the first embodiment of the present invention;
Fig.2 is an enlarged view of A in Fig.1 when the first locking member is snapped to the second locking member;
Fig.3 is an enlarged view of A in Fig. 1 when the first locking member and the second locking member is disengaged;
Fig.4 is a schematic structural diagram of a container in the first embodiment of the present invention;
Fig.5 is the enlarged view of B in Fig.4;
Fig.6 is an exploded view of the mounting body and the lock catch mounting seat in the first embodiment of the present invention;
Fig.7 is a schematic structural diagram of a container in a second embodiment of the present invention;
Fig.8 is an enlarged view of C in Fig.7;
Fig.9 is a schematic structural diagram of a container in a second embodiment of the present invention;
Fig. 10 is an enlarged view of D in Fig.9;
Fig. 11 is an exploded view of the mounting body and the lock catch limiting seat in the second embodiment of the present invention;
Fig. 12 is a schematic structural diagram of a container in a third embodiment of the present invention;
Fig. 13 is an enlarged view of E in Fig.12;
Fig.14 is an exploded view of the mounting body and the connecting member in the third embodiment of the present invention;
Fig.15 is a schematic structural diagram of a container in a fourth embodiment of the present invention;
Fig.16 is an enlarged view of F in Fig.15;
Fig.17 is an exploded view of the mounting body and the fixing seat in the third embodiment of the present invention;
Fig.18 is a schematic diagram of a container of another structure in the third embodiment of the present invention;
Fig.19 is an enlarged view of G in Fig.18.

List of reference numbers:
1. first locking member; 11. first inclined surface; 2. second locking member; 21. second inclined surface; 32. reset portion; 311, rotating shaft; 312, connecting portion; 3121, seat body; 3122, connecting seat; 31221, concave area; 313, lock catch body; 3131, limiting block; 31311, sliding slot; 314, first connecting member; 3141, first sliding plate; 3142, second sliding plate; 315, elastic plate; 3151, mounting groove; 316, lock catch mounting portion; 3161, supporting plate; 3162, supporting seat; 3163, connecting plate; 317, fixing seat; 3171, horizontal plate; 3172, vertical plate; 4, container; 41, cover; 42, side panel; 421, bearing portion; 4211, limiting bar; 422, positioning hole; 423, first flat plate; 424, second flat plate; 425, first snap plate; 426, second snap plate; 5, attraction member;6, lock catch mounting seat; 61, mounting plate; 62, guide plate; 63, rotating shaft mounting portion; 621, groove; 631, rotating shaft seat; 6311, shaft hole; 7, lock catch limiting seat; 71, limiting plate; 72, second connecting member; 711, limiting groove; 721, left snapping hook; 722, right snapping hook; 7211, left connecting plate; 7212, left hook; 7221, right connecting plate; 7222, right hook; 8. external attraction member; 9. connecting member; 91. baffle plate; 92. bending plate.

### Detailed description of embodiments

In order to make the objectives, technical solutions and advantages of the embodiments of the present invention clearer, the various embodiments of the present invention will be described in detail below with reference to the accompanying drawings. However, those of ordinary skill in the art can appreciate that, in the various embodiments of the present invention, many technical details are set forth in order for the reader to better understand the present application. However, even without these technical details and various changes and modifications based on the following embodiments, the technical solutions claimed in the present application can be realized.

In the following description, for the purpose of illustrating various disclosed embodiments, certain specific details are set forth in order to provide a thorough understanding of the various disclosed embodiments. However, those skilled in the relevant art will recognize that the embodiments may be practiced without one or more of these specific details. In other instances, well-known devices, structures and techniques associated with this application may not be shown or described in detail to avoid unnecessarily obscuring the description of the embodiments.

Unless the context requires otherwise, throughout the specification and claims, the word "comprising" and variations thereof, such as "including" and "having", should be construed in an open, inclusive sense, i.e., should be interpreted as "including, but not limited to".

The embodiments of the present invention will be described in detail below with reference to the accompanying drawings, so as to more clearly understand the objectives, features and advantages of the present invention. It should be understood that the embodiments shown in the accompanying drawings are not intended to limit the scope of the present invention, but are only intended to illustrate the essential spirit of the technical solutions of the present invention.

Reference throughout this specification to "one embodiment" or "an embodiment" means that a particular feature, structure, or characteristic described in connection with the embodiment is included in at least one embodiment. Thus, the appearances of "in one embodiment" or "in an embodiment" in various places throughout the specification are not necessarily all referring to the same embodiment. Additionally, the particular features, structures or characteristics may be combined in any manner in one or more embodiments.

As used in this specification and the appended claims, the singular forms "a" and "the" include plural referents unless the context clearly dictates otherwise. It should be noted that the term "or" is generally used in its sense including "and/or", unless clearly stated otherwise herein.

In the following description, in order to clearly show the structure and working mode of the present invention, many directional words will be used for description, but "front", "rear", "left", "right", "outer", "inner" "outward", "inward", "up", "down" and other words should be understood as convenient terms, and should not be understood as limiting words.

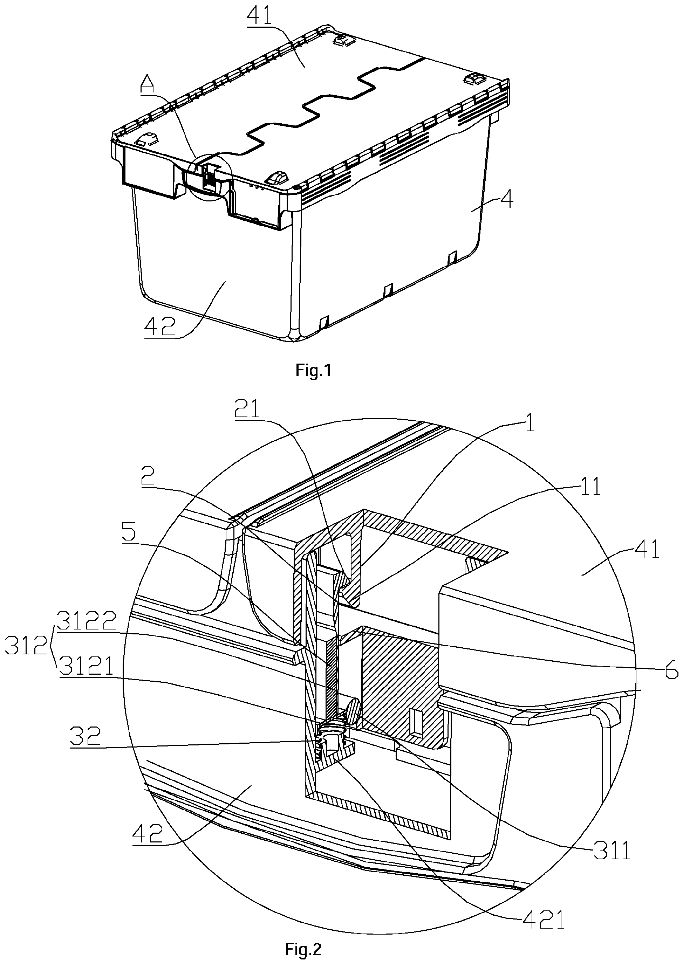

The following describes a lock catch device according to an embodiment of the present invention with reference to the accompanying drawings. As shown in Figs.1 to 3 , the lock catch device is provided in the container 4 , and the lock catch device comprises: a first locking member 1 , a second locking member 2 and a mounting body, wherein a cover 41 of the container 4 is provided with the first locking member 1, the second locking member 2 is arranged opposite to the first locking member 1, and is operatively snapped to or disengaged from the first locking member 1, any of side panels 42 of the container 4 is provided with the mounting body fixedly connected to the second locking member 2. The mounting body operatively drives the second locking member 2 to move in a direction toward or away from the first locking member 1, wherein the second locking member 2 are configured so that when the second locking member 2 is driven to move in a direction toward the first locking member 1 by the mounting body to a preset position, it is snapped with the first locking member 1, and the second locking member 2 is also configured to be driven by the mounting body to move in a direction away from the first locking member 1, and be disengaged from the first locking member 1. The mounting body can be magnetically attracted, and when being magnetically attracted, it can drive the second locking member 2 to move in a direction toward the first locking member 1. At the same time, the mounting body has a reset portion 32, and the reset portion 32 applies a biasing force that drives the second locking member 2 to move in the direction toward the first locking member 1.

Compared with the prior art, in the embodiment of the present invention, since the lock catch device includes: a first locking member 1 , a second locking member 2 and a mounting body, the mounting body can drive the second locking member 2 to move in the direction toward the first locking member 1, so that the second locking member 2 is snapped with the first locking member 1, at this time, the cover 41 of the container 4 is locked, and at the same time, the mounting body can also drive the second locking member 2 to move in the direction away from the first locking member 1, so that the second locking member 2 and the first locking member 1 are disengaged from each other, at this time, the cover 41 of the container 4 is opened. In order to enable the mounting body to drive the second locking member 2 to move in the direction away from the first locking member 1, the mounting body is configured to be magnetically attracted to drive the second locking member 2 to move in the direction away from the first locking member 1. Specifically, the second locking member 2 can be driven through the mutual magnetic attraction between the mounting body and the external attraction member 8 to moves in the direction away from the first locking member 1, so as to achieve the purpose of unlocking, and since the mounting body also has a reset portion 32, which applies a biasing force that drives the second locking member 2 to move in the direction towards the first locking member 1, when the magnetic attraction of the mounting body is removed, the mounting body can drive the second locking member 2 to return to the above-mentioned preset position through the reset portion 32, and at this time, the first locking member 1 and the second locking member 2 are restored to a state where they are snapped with each other. It can be seen from the above content that the lock catch device in this application is not disposable, but can be used repeatedly, which is environmental friendly, and since the lock catch device is entirely located in the container 4, when the cover 41 is closed, the lock catch device can not be seen from the outside, and it is only required to attach the external attraction member 8 to the outside of the side panel 42 at the position corresponding to the mounting body, the mounting body and the external attraction member 8 are attracted by each other, and the lock catch device can be opened. Since the lock catch device is invisible, temporary workers such as logistics personnel and couriers cannot know the key to open the box at all and will be unable to unlock the container, thus the safety of the container 4 can be significantly improved.

Specifically, as shown in Figs. 2 to 6 , the mounting body includes a lock catch mounting member and the above-mentioned reset portion 32 , wherein the lock catch mounting member is fixedly connected to the second locking member 2, and the lock catch mounting member can be magnetically attracted, the reset portion 32 exerts a biasing force that drives the second locking member to move in the direction toward the first locking member to the lock catch mounting member, so the lock catch mounting member can be driven by the reset member to drive the second locking member 2 to move in the direction toward the first locking member 1. Therefore, so as long as the external attraction member 8 is removed, the first locking member 1 and the second locking member 2 will be automatically locked together through the reset portion 32.

As shown in Figs. 2 to 6 , the first locking member 1 extends downward from the cover 41 , the second locking member 2 extends from bottom to top, and the second locking member 2 is located on a side of the first locking member 1 facing the side panel 42, and the first locking member 1 and the second locking member 2 are arranged opposite to each other, the lock catch mounting member is located below the second locking member 2, and is fixedly connected to a lower end of the second locking member 2, and the lock catch mounting member drive the second locking member 2 to rotate in a direction toward or away from the first locking member 1 with one end thereof away from the second locking member 2 as the center of rotation.

In order to drive the second locking member 2 to rotate, as shown in Figs. 2 to 6 , the lock catch mounting member comprises: a rotating shaft 311 and a connecting portion 312, the rotating shaft 311 is arranged parallel to the above-mentioned side panel 42 of the container 4 and is also parallel to a base of the container 4, the rotating shaft 311 can rotate around its own axis, the connecting portion 312 is fixedly connected to the rotating shaft 311 and the second locking member 2 respectively, and the connecting portion 312 operatively drives the second locking member 2 to rotate around the axis of the rotating shaft 311, the reset portion 32 is fixedly connected to the connecting portion 312 , and exerts a force that moves in a direction toward the first locking member 1 to the connecting portion 312 .

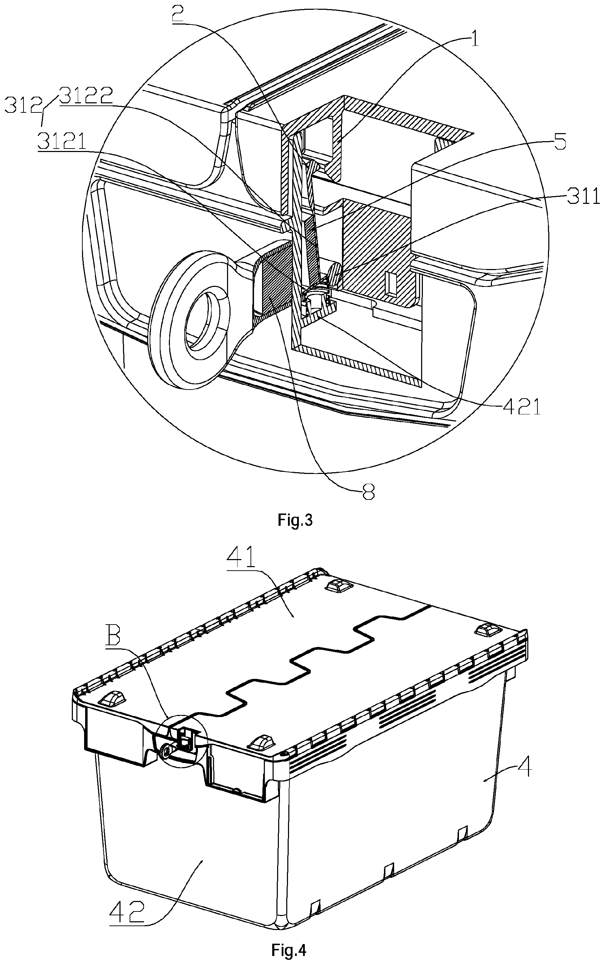

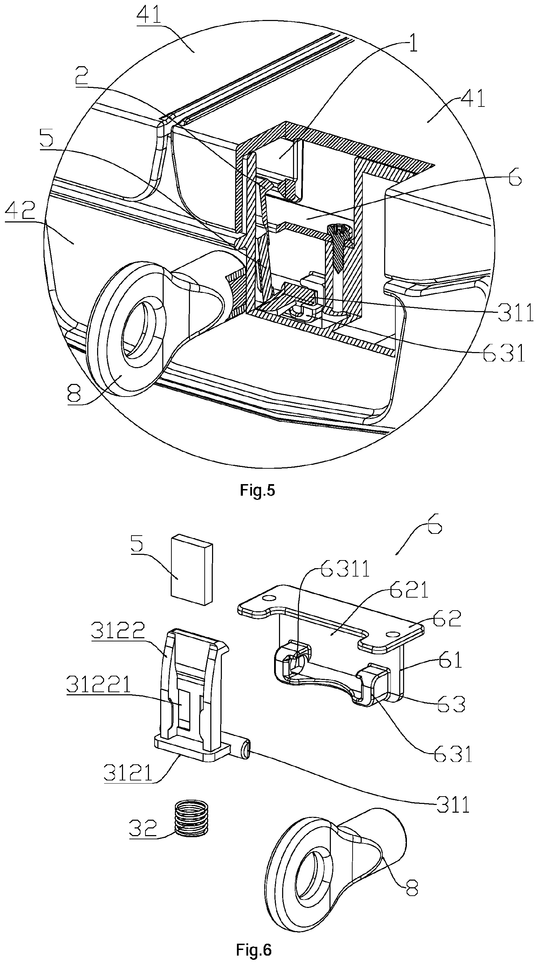

In addition, as shown in Fig. 3, a portion of the inner wall of the side panel 42 extends toward the interior of the container 4 to form a bearing portion 421. At the same time, as shown in Fig.6, the connecting portion 312 comprises: a seat body 3121 and connecting seat 3122, the seat body 3121 extends from the rotating shaft 311 in a direction toward the side panel 42, the connecting seat 3122 extends upward from the seat body 3121, and is fixedly connected to the second locking member 2, and the connecting seat 3122 is also arranged parallel to the side panel 42. Specifically, the material of the connecting seat 3122 may be a magnetic conductor, such as iron, stainless steel, and etc., so that the external attraction member 8 can be a magnetic body, such as a magnet, and by the magnetically attracting the connecting seat 3122 of iron, the connecting seat 3122 can be driven to move. Of course, the connecting seat 3122 may also be provided with an attraction member 5, which can be a magnetic body or a magnetic conductor, as shown in Fig. 6, the side of the connecting seat 3122 facing the side panel 42 has a concave area 31221, and the attraction member 5 is embedded in the concave area 31221. Of course, the attraction member 5 can also be arranged on the side of the connecting seat 3122 away from the side panel 42. However, if it is arranged on the side away from the side panel 42, the attracting force of the attraction member 5 needs to be enhanced. As shown in Fig.3, and the reset portion 32 is an elastic member, the upper end of the elastic member 32 is fixedly connected to the lower end of the seat body 3121, and the lower end of the elastic member is fixed to the bearing portion 421. Further, as shown in Fig.3, a snap concave area is provided below the seat body 3121, the elastic member is a spring, and the upper end of the spring is snapped to the inside of the snap concave area. In addition, the bearing portion 421 is provided with a vertical post, the spring is an annular spring, and the annular spring is sleeved over the vertical post.

Of course, in some embodiments, the connecting portion 312 may also only include the connecting seat 3122, the lower end of the connecting seat 3122 is directly and fixedly connected to the rotating shaft 311, and the elastic member is arranged between the connecting seat 3122 and the side panel 42, and respectively abuts against the side panel 42 and the connecting seat 3122 each other. If the attraction member 5 is arranged on the side of the connecting seat 3122 facing the side panel 42, the elastic member abuts against the side panel 42 and the attraction member 5 respectively.

As shown in Figs. 5 and 6, the lock catch device further includes a lock catch mounting seat 6, which is located on the side of the lock catch mounting member away from the side panel 42, and the rotating shaft 311 is rotatably connected to the lock catch mounting seat 6. Specifically, the lock catch mounting seat 6 includes: a mounting plate 61, a guide plate 62 and a rotating shaft mounting portion 63, the mounting plate 61 is arranged opposite to the connecting portion 312, the guide plate 62 extends from an upper end of the mounting plate 61 in a direction toward the connecting portion 312, an end of the guide plate 62 is provided with a groove 621 that opens to the connecting portion 312, and the connecting portion 312 is slidably arranged in the groove 621 in the direction toward or away from the bottom of the groove 621, through the groove 621, the rotation of the connecting portion 312 may be guided and limited. When the lock catch mounting seat drives the second locking member to move to the above-mentioned preset position in the direction toward the first locking member, the bottom of the groove abuts against the lock catch mounting seat, the rotating shaft mounting portion 63 extends from the lower segment of the mounting plate 61 in the direction toward the rotating shaft 311, and the rotating shaft 311 is rotatably connected to the rotating shaft mounting portion 63. As shown in Figs. 5 and 6, the rotating shaft mounting portion 63 includes a pair of rotating shaft seats 631, which are arranged opposite to each other in the length direction of the rotating shaft 311, and each rotating shaft seat 631 is provided with a shaft hole 6311 on the side thereof facing the other rotating shaft seat 631. In this embodiment, the shaft hole 6311 is a blind hole, of course, in some embodiments, it can also be a through hole. Both ends of the rotating shaft 311 in the length direction are rotatably located in the two shaft holes 6311 in the pair of rotating shaft seats 631, respectively.

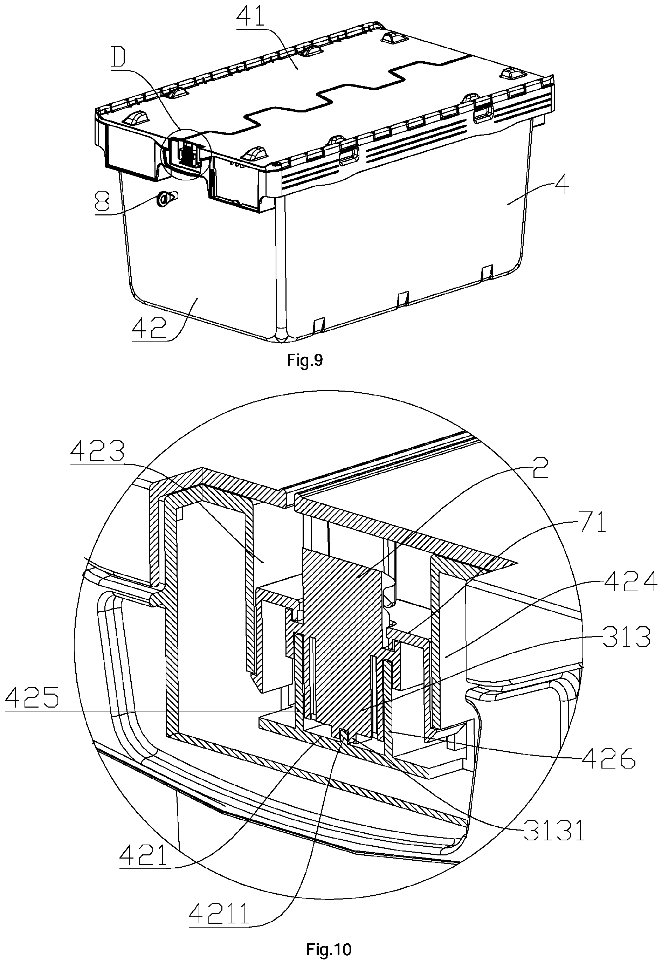

In addition, as shown in Figs. 1 to 14 , the first locking member 1 is a first elastic snapping hook, and the end of the first elastic snapping hook extends in the direction toward the second locking member 2 to form a hook, and the lower end surface of a portion of the first elastic snapping hook extending toward the second locking member 2 is a first inclined surface 11 inclined from top to bottom, from the second locking member 2 in a direction away from the second locking member 2; the second locking member 2 is a second elastic snapping hook, and the end of the second elastic snapping hook also extends toward the first elastic hook to forms a hook. Since the first locking member 1 and the second locking member 2 are both elastic snapping hooks, and the first elastic snapping hook has a first inclined surface 11, as shown in Fig.2, through the guidance of the first inclined surface 11, and because the two locking members are elastic, when the cover 41 is closed on the box body of the container 4, the first elastic snapping hook and the second elastic snapping hook can be automatically snapped together through the guidance of the first inclined surface 11. In addition, in order to enhance the guidance effect, the upper end surface of a portion of the second elastic hook extending toward the first locking member 1 is a second inclined surface 21 inclined from top to bottom, in the direction from the second locking member 2 to the first locking member 1.

Of course, in some embodiments, the first locking member 1 may also be a vertical plate, and the vertical plate is provided with a snap hole on the side facing the second locking member 2, and the second locking member 2 is the above-mentioned second elastic snapping hook , the second elastic snapping hook can be inserted into the snap hole. Of course, the second locking member 2 can also be a vertical plate, the vertical plate also is provided with a snap hole on the side facing the first locking member 1, and the first locking member 1 is the above-mentioned first elastic snapping hook, the first elastic snapping hook can be inserted into the snap hole. Of course, the first elastic snapping hook and the second elastic snapping hook may not be elastic.

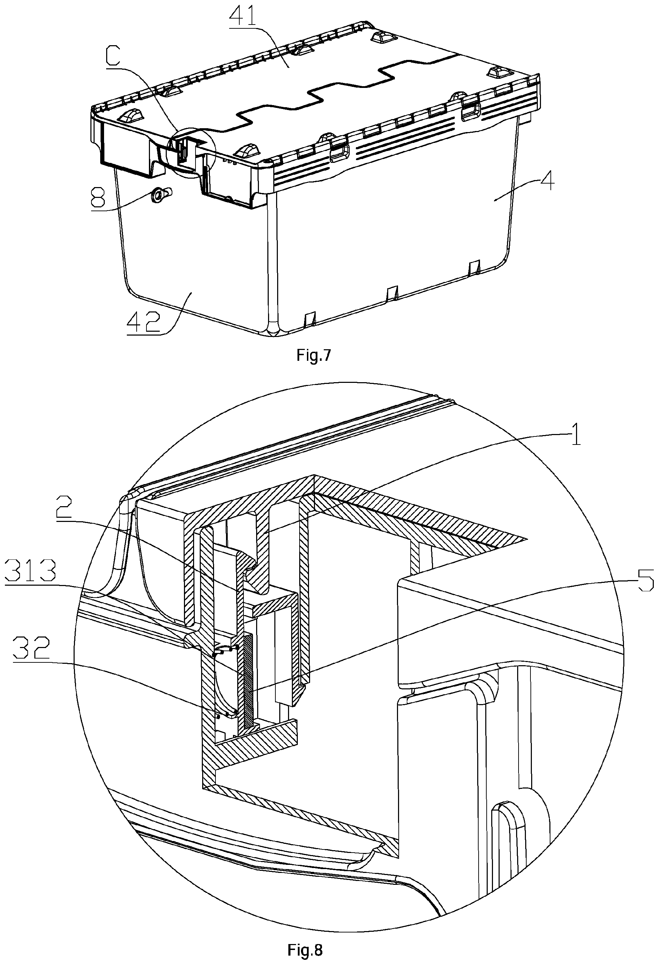

The second embodiment of the present invention provides a lock catch device. The second embodiment is substantially the same as the first embodiment, and the main difference from the first embodiment is the structure of the mounting body. Specifically, as shown in Figs. 7 to 11, the first locking member 1 extends downward from the cover 41, the second locking member 2 extends from bottom to top, and the second locking member 2 is located on the side of the first locking member 1 facing the side panel 42, the mounting body further includes: the reset portion 32 and the lock catch mounting member, the lock catch mounting member can be magnetically attracted, and the lock catch mounting member drives the second locking member 2 to move linearly in the direction toward or away from the first locking member 1 , the reset portion 32 is a resilient member that is abutted against the side panel 42 and the lock catch mounting member respectively, and in order to enable the lock catch mounting member to drive the second locking member 2 to move linearly, the lock catch mounting member is movably arranged on the bearing portion 421.

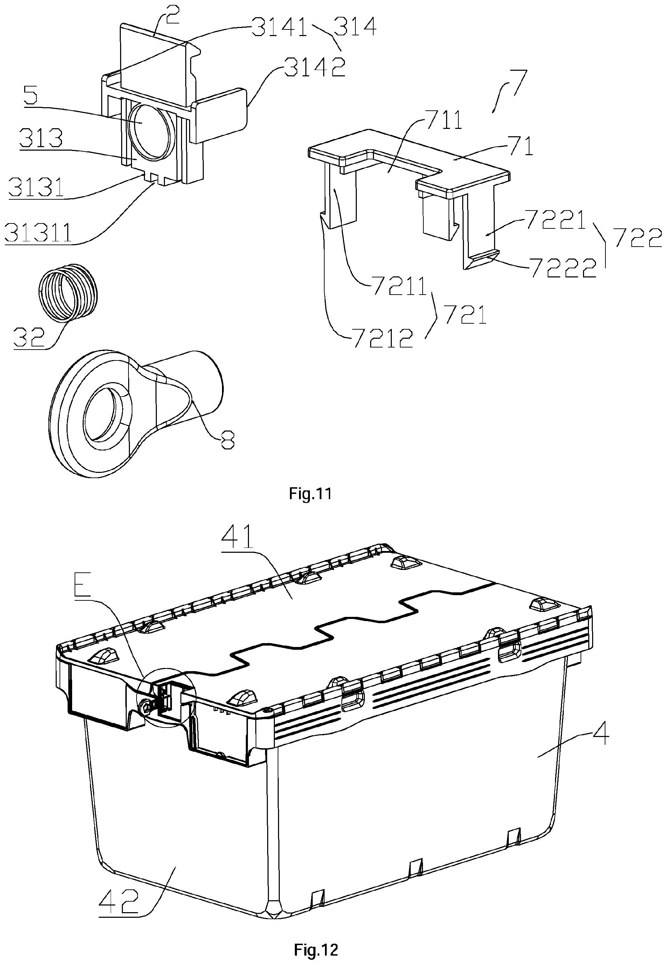

As shown in Figs.8 and 11, the lock catch mounting member comprises: a lock catch body 313 arranged in parallel with the side panel 42 , and a first connecting member 314 arranged on the lock catch body 313 , wherein the lock catch body 313 can be magnetically attracted , the lock catch body itself can be a magnetic body or a magnetic conductor. Of course, the lock catch body may also be provided with an attraction member 5,which is located on the side of the lock catch body 313 facing the side panel 42, the lock catch body 313 and the second locking member 2 is fixedly connected, the lock catch body 313 is slidably connected to the above-mentioned bearing portion 421, and meanwhile, the lock catch device further comprises: a lock catch limiting seat 7, which is located on the side of the lock catch mounting member away from the side panel 42, and the side of the lock catch limiting seat 7 facing the lock catch mounting member is provided with a limiting groove 711 that is open to the lock catch mounting member. The lock catch mounting member is slidably arranged in the limiting groove 711 in the direction toward or away from the first locking member.

Specifically, as shown in Figs.8,10 and 11, the lock catch limiting seat 7 includes: a limiting plate 71 and a second connecting member 72 , the limiting plate 71 is arranged perpendicular to the lock catch body 313, and is provided with the above-mentioned limiting groove 711 on the side facing lock catch body 313, the first connecting member 314 is slidably connected to the second connecting member 72. As shown in Fig. 11 , the second connecting members 72 are the left snapping hook 721 and the snap right hook 722 that extend downward from the limiting plate 71, and the left snapping hook 721 includes: a left connecting plate 7211 extending downward from the limiting plate 71, and a left hook 7212 extending from the end of the left connecting plate 7211 in a direction away from the right snapping hook 722, and the right snapping hook 722 includes: a right connecting plate 7221 extending downward from the limiting plate 71, and a right hook 7222 extending from the end of the right connecting plate 7221 in a direction away from the left snapping hook 721. The container 4 further includes a first flat plate 423 and a second flat plate 424 that are fixed to the side panel 42, the first flat plate 423 is arranged on the left hook 7212, and the second flat plate 424 is arranged on the right hook 7222, so that the lock catch limiting seat 7 is fixed to the side panel 42.

In addition, as shown in Figs.8, 10 and 11, a limiting bar 4211 is provided on the bearing portion 421, a limiting block 3131 is provided at the bottom of the lock catch body 313, and an elongated sliding slot 31311 is provided at the bottom of the limiting block 3131. The limiting bar 4211 is slidably connected to the sliding slot 31311, and meanwhile, a first snap plate 425 and a second snap plate 426 extend upward from the bearing portion 421, the first snap plate 425 and the second snap plate 426 are arranged opposite to each other, and both are arranged perpendicular to the side panel 42. The first connecting member 314 includes: a first sliding plate 3141 and a second sliding plate 3142, which are oppositely arranged on both sides of the lock catch body 313 in the left-right direction. The first sliding plate 3141 and the second sliding plate 3142 are both separated from the lock catch body 313, the first snap plate 425 is inserted between the first sliding plate 3141 and the lock catch body 313, the second snap plate 426 is inserted between the second sliding plate 3142 and the lock catch body 313, and the first sliding plate 3141 and a second sliding plate 3142 are located below the limiting plate 71, which can limit the up and down movement of the lock catch mounting member. In addition, the above-mentioned lock catch mounting seat 6 and the lock catch limiting seat 7 can be fixed to the side panel 42 by one or several connecting plates.

Of course, in some embodiments, the lock catch limiting seat 7 may not adopt the above structure, but translate along with the lock catch mounting body, the lock catch limiting seat 7 translates back and forth along the direction perpendicular to the side panel, and the lock catch limiting seat 7 is fixedly connected to the lock catch mounting body.

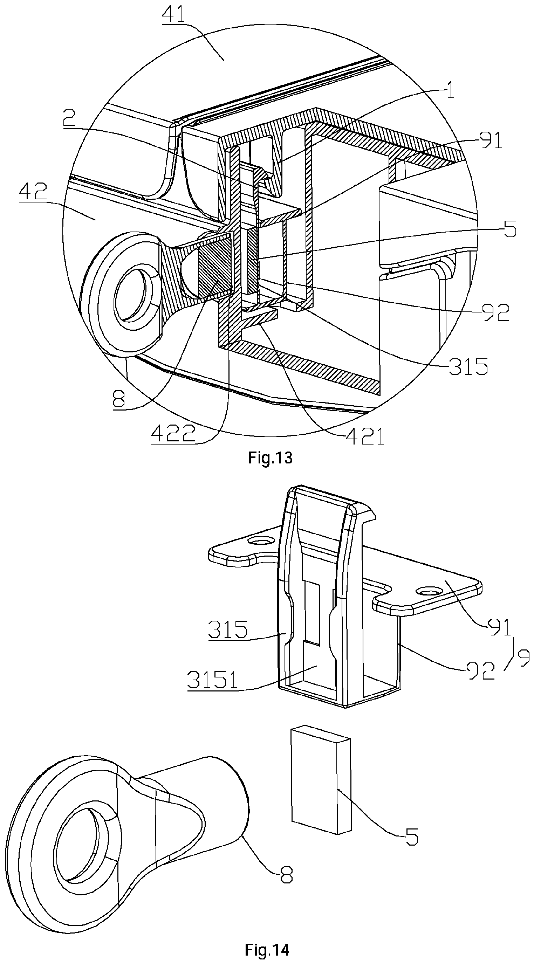

The third embodiment of the present invention provides a lock catch device. The third embodiment is substantially the same as the first embodiment, and the main difference from the first embodiment is the structure of the mounting body. As shown in Figs. 12 to 14, a first locking member 1 extends downward from the cover 41, and a second locking member 2 extends from bottom to top, and the second locking member 2 is located on the side of the first locking member 1 facing the side panel 42, and as shown in Figs. 13 and 14 , the mounting body extends from bottom to top until it is fixedly connected to the second locking member 2 , the mounting body is a flexible elastic member, and the mounting body may be a magnetic conductive plate, such as an iron elastic plate, the second locking member 2 is configured such that when the mounting body is in a natural state, it is snapped to the first locking member 1 each other. Specifically, as shown in Figs. 13 and 14, the mounting body is an elastic plate 315 arranged vertically, and the reset portion is an elastic segment of the elastic plate. The elastic plate 315 is arranged parallel to the side panel 42. Of course, the mounting body can also be provided with an attraction member 5, which is arranged on the side of the elastic plate 315 facing the side panel 42. Of course, the attraction member 5 may also be arranged on the side of the elastic plate 315 away from the side panel 42. A lower end of the mounting body is fixed, and the lower end of the mounting body is fixedly connected to the above side panel 42 by a connecting member 9. When the external attraction member 8 and the attraction member 5 are magnetically attracted to each other, the attraction member 5 pushes the elastic plate 315 to turn over in a direction toward the side panel 42, and at this time, the first locking member 1 and the second locking member 2 are disengaged from each other. When the external attraction member 8 is removed, the elastic plate 315 drives the second locking member 2 to rebound in a direction toward the first locking member 1 through an elastic force of the elastic plate 315, and at this time, the elastic plate 315 returns to its natural state, and the first locking member 1 and the second locking member 2 are locked together again. The elastic plate 315 is provided with a fixing groove on the side of the elastic plate 315 facing the side panel 42, and the attraction member 5 is fixed in the fixing groove.

Of course, in some embodiments, the lock catch mounting member may also be only an elastic rod or other elastic member, as long as it does not depart from the scope of the present invention.

Specifically, as shown in Figs. 13 and 14, the connecting member 9 comprises: a baffle plate 91 and a bending plate 92 that are arranged perpendicular to the side panel 42, wherein the baffle plate 91 is arranged on the side of the elastic plate 315 away from the side panel 42, one end of the bending plate 92 is fixedly connected to the baffle plate 91, and the other end is fixedly connected to the lower end of the elastic plate 315. The connecting member 9 is fixedly connected to the components protruding from the side panel 42 by means of screws.

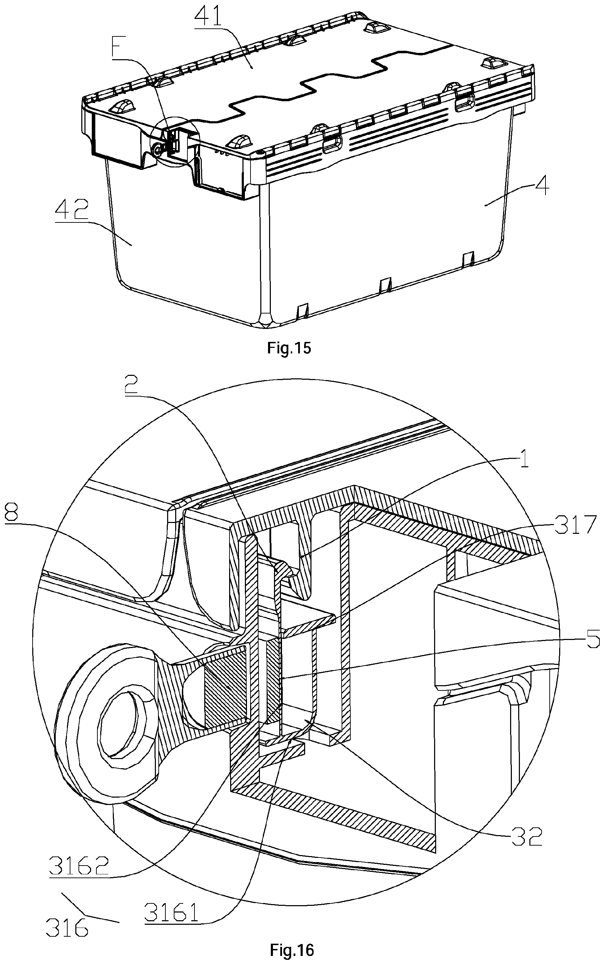

The fourth embodiment of the present invention provides a lock catch device. The fourth embodiment is substantially the same as the first embodiment, and the main difference from the first embodiment is the structure of the mounting body. As shown in Figs. 15 to 18, a first locking member 1 extends downward from the cover 41, a second locking member 2 extends from bottom to top, and the second locking member 2 is located on the side of the first locking member 1 facing the side panel 42 , and the reset portion 32 is located on the side of the second locking member 2 away from the side panel 42, and the mounting body comprises: a lock catch mounting portion 316 and the above-mentioned reset portion 32, wherein the lock catch mounting portion 316 can be magnetically attracted, and the lock catch mounting portion 316 is fixedly connected to the second locking member 2, the reset portion 32 is an elastic plate, the elastic plate is located on the side of the lock catch mounting portion 316 away from the side panel 42, and is fixedly connected to the lock catch mounting portion 316, and the lock catch mounting portion 316 drives the second locking member 2 to rotate in the direction toward or away from the first locking member 1 with the elastic plate as the center of rotation.

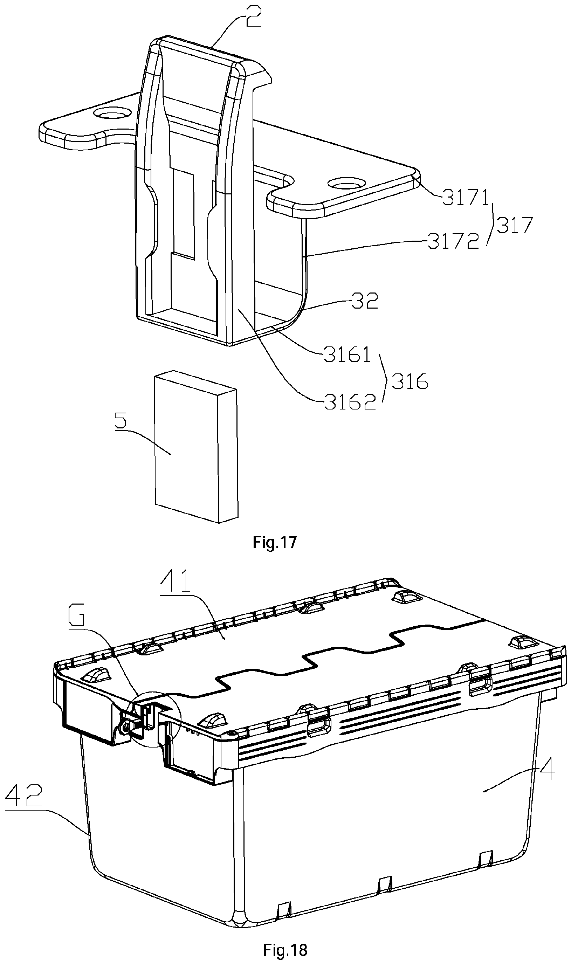

Specifically, as shown in Figs. 16 and 17, in this embodiment, when the reset portion 32 is an elastic plate, the elastic plate is an arc elastic plate, and the arc elastic plate may be a metal arc elastic plate, and the arc elastic plate is recessed in a direction toward the second locking member 2. In addition, as shown in Figs. 16 and 17, the lock catch mounting portion 316 includes a supporting plate 3161 and a supporting seat 3162. The supporting plate 3161 extends from the side of the arc elastic plate facing the side panel 42 in a direction toward the side panel 42. The supporting seat 3162 extends upward from the support plate 3161 and is fixedly connected to the lower end of the second locking member 2. The supporting seat 3162 can be magnetically attracted, and the supporting seat 3162 itself can be a magnetic body or a magnetic conductor. Of course, the supporting seat 3162 can also be provided with the attraction member 5. When the attraction member 5 and the external attraction member 85 are magnetically attracted to each other, the supporting seat 3162 and the support plate 3161 turn over towards the side panel 42 with the arc elastic plate as the rotation center. Meanwhile, the first locking member 1 and the second locking member 2 are disengaged from each other. When the external attraction member 85 is removed, since the reset portion 32 is an arc elastic plate, the elastic force of the arc elastic plate can drive the supporting seat 3162 and the supporting plate 3161 to be turned over to the preset position in the direction toward the first locking member 1 with the arc elastic plate as the center of rotation. At this time, the first locking member 1 and the second locking member 2 are snapped with each other. When the first and second locking members 1 and 2 are snapped with each other, the arc spring plate is in a natural state.

In addition, as shown in FIgs. 16 and 17, in order to fix the mounting body, the arc elastic plate is detachably connected to the side panel 42 through a fixing seat 317, the fixing seat 317 comprises: a horizontal plate 3171 arranged perpendicular to the supporting seat 3162 and a vertical plate 3172 fixedly connected to the horizontal plate 3171, the vertical plate 3172 is fixedly connected to the arc elastic plate, and the horizontal plate 3171 is fixedly connected to the side panel 42 by screws.

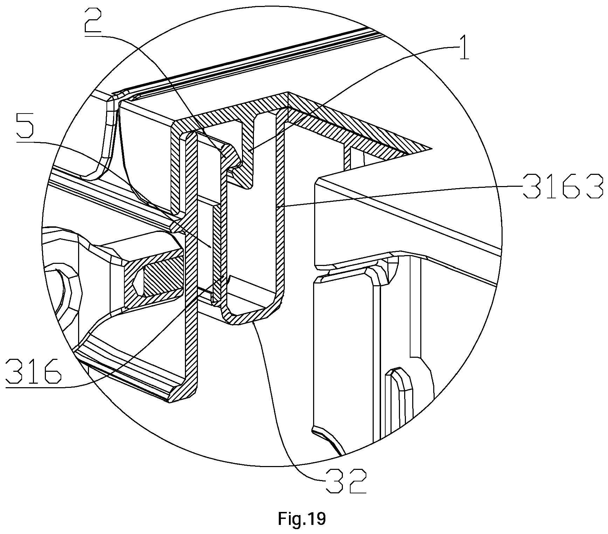

Of course, in some embodiments, as shown in Figs. 18 and 19, the elastic plate is arranged perpendicular to the side panel 42, the lock catch mounting portion 316 extends upward from the elastic plate and is fixedly connected to the lower end of the second locking member 2, and the attraction member 5 is provided on the lock catch mounting portion 316, the mounting body can be integrally formed with the side panel 42 through other connecting plates 3163. The lock catch mounting portion 316 may be a straight plate or some other structural components, as long as it does not depart from the scope of the invention.

The fifth embodiment of the present invention relates to a locking unit. As shown in Figs.1 to 19, the locking unit includes the lock catch device in the first embodiment and an external attraction member 8, and the mounting body in the lock catch device is configured to be operatively magnetically attracted by the magnetic force of the external attraction member and drive the second locking member to move in a direction away from the first locking member. Specifically, when the above-mentioned mounting body itself is a magnetic conductor, and the external attraction member 8 is a magnet; when the above-mentioned mounting body is a magnet, the external attraction member 8 is a magnetic conductor or a magnetic body. Of course, the mounting body may also have an additional attraction member 5. Either one of the attraction member 5 and the external attraction member 8 is a magnetic body, such as a magnet, and the other is a magnetic conductor, such as an iron block; or in some embodiments, the attraction member 5 and the external attraction member 8 are both magnetic bodies, such as magnets. During the actual operation, the external attraction member 8 may be attached to a certain position outside the side panel 42, the certain position is opposite to the attraction member 5, through the mutual attracting between the external attraction member 8 and the attraction member 5, the lock catch mounting member can be pushed to drive the second locking member 2 to move in a direction away from the first locking member 1, at this time, the first locking member 1 and the second locking member 2 are unlocked from each other.

The sixth embodiment of the present invention relates to a container. As shown in Figs.1 to 19, the container 4 comprises: a base, two pairs of side panels 42 arranged opposite to each other and a cover 41, the side panels 42 are all connected to the base, and the cover 41 is arranged opposite to the base and is covered on the side panels 42. Further, the container 4 also comprises the lock catch device in the first embodiment. The lock catch device is arranged in the container 4 and located on any one of the side panels 42. In addition, the outer side of the side panel 42 provided with the lock catch device is provided with an identification member, and the identification member is arranged opposite to the attraction member 5 with the side panel 42 therebetween. The identification member can be a mark glued or sprayed on the side panel 42, through the identification member, the unlocking personnel is able to know that the external attraction member 8 should be placed in that position for facilitating unlocking.

Specifically, as shown in Fig. 13, in this embodiment, the mark is a positioning hole 422 provided on the side panel 42. The positioning hole 422 is preferably a blind hole, of course, it may also be a through hole. Due to the positioning hole 422 provided on the plate 42, the external attraction member 8 can be positioned. At the same time, by providing the blind hole, the distance between the attraction member 5 and the external attraction member 8 can be reduced, and the plate between them is also thinned, thus further facilitating unlocking.

Those skilled in the art can understand that the above-mentioned embodiments are specific examples for realizing the present invention, and in practical applications, various changes in form and details can be made without departing from the spirit and the scope of the present invention.

## Claims

1. A lock catch device, wherein the lock catch device is arranged in the container, the lock catch device comprises:
a first locking member, which is arranged to a cover of the container;
a second locking member, which is arranged opposite to the first locking member, and is operatively moved in a direction toward the first locking member to a preset position, and is snapped to the first locking member, or the second locking member is moved in a direction away from the first locking member and is disengaged from the first locking member;
an mounting body, which is arranged to any of side panels of the container, and is fixedly connected to the second locking member, and the mounting body has a reset portion, the mounting body operatively drives the second locking member to move in a direction toward or away from the first locking member;
wherein the mounting body is configured to be operatively magnetically attracted to drive the second locking member to move in the direction away from the first locking member, and the reset portion applies a biasing force that drives the second locking member to move in the direction towards the first locking member.

2. The lock catch device according to claim 1, wherein the first locking member extends downward from the cover, the second locking member extends from bottom to top, and the second locking member is located on a side of the first locking member facing the side panel, the mounting body is located below the second locking member and is fixedly connected to a lower end of the second locking member, and the mounting body operatively drives the second locking member to rotate in the direction of toward or away from the first locking member with an end away from the second locking member as a center of rotation.

3. The lock catch device according to claim 2, wherein the mounting body comprises:
a rotating shaft, which is arranged parallel to the side panel, and the rotating shaft is rotatable around its own axis;
a connecting portion, which is fixedly connected to the rotating shaft and the second locking member respectively, and the connecting portion operatively drives the second locking member to rotate around the axis of the rotating shaft, the connecting portion is operatively magnetically attracted;
the reset portion, which is fixedly connected to the connecting portion, and applies a biasing force to the connecting portion that drives the second locking member to move in the direction toward the first locking member.

4. The lock catch device according to claim 3, wherein a portion of the inner wall of the side panel extends toward the inside of the container to form a bearing portion, and the connecting portion comprises:
a seat body, which extends from the rotating shaft in a direction toward the side panel;
a connecting seat, which extends upward from the seat body and is fixedly connected to the second locking member, and the connecting seat is operatively magnetically attracted;
wherein the reset portion is an elastic member, an upper end of the elastic member is fixedly connected to a lower end of the seat body, and a lower end of the elastic member is fixed to the bearing portion.

5. The lock catch device according to claim 4, wherein a snap concave area is provided below the seat body, and an upper segment of the elastic member is snapped into the snap concave area.

6. The lock catch device according to claim 3, wherein the lock catch device further comprises a lock catch mounting seat, which is located on a side of the connecting portion away from the side panel, and the rotating shaft is rotatably connected to the lock catch mounting seat.

7. The lock catch device according to claim 6, wherein the lock catch mounting seat comprises:
a mounting plate, which is arranged opposite to the connecting portion;
a guide plate, which extends from an upper segment of the mounting plate in a direction toward the connecting portion, an end of the guide plate is provided with a groove that is open toward the connecting portion, and the connecting portion is slidably arranged inside the groove in a direction toward or away from a bottom of the groove;
a rotating shaft mounting portion, which extends from a lower segment of the mounting plate in a direction toward the rotating shaft, and the rotating shaft is rotatably connected to the rotating shaft mounting portion.

8. The lock catch device according to claim 7, wherein the rotating shaft mounting portion comprises: a pair of rotating shaft seats oppositely arranged in a length direction of the rotating shaft, each of the rotating shaft seats is provided with a shaft hole in the side facing the other rotating shaft seat, and both ends of the rotating shaft in the length direction are rotatably located in the two shaft holes on the pair of rotating shaft seats respectively.

9. The lock catch device according to claim 1, wherein the mounting body comprises:
a lock catch mounting member, which drives the second locking member to move linearly in a direction toward or away from the first locking member, and the lock catch mounting member is operatively magnetically attracted;
the reset portion, which is a resilient member, and the resilient member is abutted against the side panel and the lock catch mounting member respectively.

10. The lock catch device according to claim 9, wherein the lock catch device further comprises a lock catch limiting seat, which is located on a side of the lock catch mounting member away from the side panel, and a side of the lock catch limiting seat facing the lock catch mounting member is provided with a limiting groove open to the lock catch mounting member, and the lock catch mounting member is slidably arranged in the limiting groove in a direction toward or away from the first locking member.

11. The lock catch device according to claim 2, wherein the mounting body comprises:
a lock catch mounting portion, which is fixedly connected to the second locking member, and the lock catch mounting portion is operatively magnetically attracted;
the reset portion, which is an elastic plate, the elastic plate is located on a side of the lock catch mounting portion away from the side panel, and is fixedly connected to the lock catch mounting portion, and the lock catch mounting portion drives the second locking member to rotate in a direction toward or away from the first locking member with the elastic plate as the center of rotation.

12. The lock catch device according to claim 11, wherein the elastic plate is an arc elastic plate, and the arc elastic plate is recessed in a direction toward the second locking member; the lock catch mounting portion comprises:
a supporting plate, which extends from a side of the arc spring plate toward the side panel in a direction toward the side panel;
a supporting seat, which extends upward from the supporting plate and is fixedly connected to a lower end of the second locking member, and the supporting seat is operatively magnetically attracted.

13. The lock catch device according to claim 11, wherein the elastic plate is arranged perpendicular to the side panel, and the lock catch mounting portion extends upward from the elastic plate and is fixedly connected to the lower end of the second locking member.

14. The lock catch device according to any one of claims 1 to 13, wherein the first locking member is a first elastic snapping hook, an end of the first elastic snapping hook extends in a direction toward the second locking member, and a lower end surface of a portion of the first elastic snapping hook extending toward the second locking member is an inclined surface inclined from top to bottom, from the second locking member in a direction away from the second locking member;
the second locking member is a second elastic snapping hook, and an end of the second elastic hook extends in a direction toward the first elastic snapping hook.

15. A locking unit, wherein the locking unit comprises: the lock catch device according to any of claims 1-13 and an external attraction member;
wherein the mounting body is configured to be operatively attracted by a magnetic force of the external attraction member, and drive the second locking member to move in a direction away from the first locking member.

16. A container, wherein the container comprises:
a base;
two pairs of opposite side panels, each of which is connected to the base;
a cover, which is arranged opposite to the base and covered on the side panels;
a lock catch device according to any one of claims 1 to 13, the lock catch device is arranged inside the container and located on any of the side panels.

17. The container according to claim 16, wherein an identification member is provided on an outside of the side panel provided with the lock catch device, and the identification member is arranged opposite to the mounting body.

18. The container according to claim 17, wherein the identification member is a positioning hole formed on the side panel.
